# EUROPÄISCHE PATENTANMELDUNG

(11) **EP 1 885 038 A1**
(43) Veröffentlichungstag der Anmeldung: **06.02.2008**
(21) Anmeldenummer: 06118229.1
(22) Anmeldetag: 01.08.2006
(51) Int. Cl.: H02J 7/35

(54) **Tragbares Speisegerät zur Stromversorgung von elektrischen Kleingeräten**

(71) Anmelder: Reinehr, Emil, 2545 Selzach (CH)
(72) Erfinder: Reinehr, Emil, 2545 Selzach (CH)
(74) Vertreter: Rutz & Partner

(57) **Zusammenfassung**

Das tragbare Speisegerät (1) zur Stromversorgung von elektrischen Kleingeräten weist mehrere, Solarzellen enthaltende, flexible Solarmodule (2) auf, die untereinander elektrisch in Serie und/oder parallel geschaltet sind. Die Solarmodule (2) sind mittels einer Gelenkverbindung (3), die eine gemeinsame Schwenkachse (3a) festlegt, miteinander gelenkig verbunden. Die Solarmodule (2) können einzeln aus einer Ausserbetriebsstellung, in der sie übereinander liegend angeordnet sind, in eine Betriebsstellung verschwenkt werden, in der mindestens ein Solarmodul (2) zum Empfang von Lichtstrahlung frei liegt.

## Beschreibung

Die vorliegende Erfindung betrifft ein tragbares Speisegerät zur Stromversorgung von elektrischen Kleingeräten.

Es sind schon verschiedene Arten von tragbaren Speisegeräten zur Stromversorgung von elektrischen Kleingeräten, wie z.B. tragbaren Computern, Mobiltelefonen und dgl., bekannt (siehe z.B. WO-A-2005/029673, WO-A-2005/074095 und GB-A-2 298 325).

Der vorliegenden Erfindung liegt nun die Aufgabe zugrunde, ein tragbares Speisegerät der eingangs genannten Art zu schaffen, das leicht und handlich ist und eine ausreichende und gegebenenfalls anpassbare Ausgangsleistung für den Betrieb von Kleingeräten der verschiedensten Art liefert.

Diese Aufgabe wird erfindungsgemäss mit einem Speisegerät mit den Merkmalen des Anspruches 1 gelöst.

Bevorzugte Weiterausgestaltungen des erfindungsgemässen Speisegerätes bilden Gegenstand der abhängigen Ansprüche.

Im Folgenden werden anhand der Figuren Ausführungsbeispiele des Erfindungsgegenstandes näher erläutert. Es zeigen rein schematisch:
- Fig. 1: in Draufsicht eine erste Ausführungsform eines erfindungsgemässen Speisegerätes mit aufgefächerten Solarmodulen,
- Fig. 2: in Draufsicht das Gerät gemäss Fig.1 mit zusammengeklappten Solarmodulen,
- Fig. 3: in einer perspektivischen Darstellung einen Teil des in der Fig. 2 gezeigten Gerätes,
- Fig. 4: das die Solarmodule des Gerätes gemäss den Fig. 1 - 3 zusammenhaltende Verbindungselement teilweise im Schnitt,
- Fig. 5: die Solarmodule des Gerätes gemäss den Fig. 1 - 3 in Parallelschaltung,
- Fig. 6: die Solarmodule des Gerätes gemäss den Fig. 1 - 3 in Serieschaltung,
- Fig. 7: die Solarmodule des Gerätes gemäss den Fig. 1 - 3 in Parallel-/Serieschaltung,
- Fig. 8: ein für die Parallelschaltung gemäss Fig. 5 ausgebildetes Solarmodul in Draufsicht,
- Fig. 9: in gegenüber der Fig. 8 vergrössertem Massstab und in Draufsicht ein Zwischenelement zur Bildung der Serieschaltung gemäss Fig. 6,
- Fig. 10: einen Schnitt entlang der Linie X-X in Fig. 9,
- Fig. 11: in einer auseinander gezogenen Darstellung und in Seitenansicht ein Gerät mit Solarmodulen in Parallel-/Serieschaltung gemäss Fig. 7;
- Fig. 12: ein erstes für die Reihenschaltung ausgebildetes Sonder-Solarmodul des Gerätes gemäss Fig. 11 in Draufsicht,
- Fig. 13: das erste Sonder-Solarmodul gemäss Fig. 12 in Unteransicht,
- Fig. 14: ein zweites für die Reihenschaltung ausgebildetes Sonder-Solarmodul des Gerätes gemäss Fig. 11 in Draufsicht,
- Fig. 15: das zweite Sonder-Solarmodul gemäss Fig. 14 in Unteransicht,
- Fig. 16: in Draufsicht eine zweite Ausführungsform eines erfindungsgemässen Gerätes mit umklappbaren Solarmodulen,
- Fig. 17: ein Adapterkabel für das Gerät gemäss Fig. 16, und
- Fig. 18 - 20: in Draufsicht eine Variante der zweiten Ausführungsform eines erfindungsgemässen Gerätes mit auf unterschiedliche Weise umgeklappten Solarmodulen.

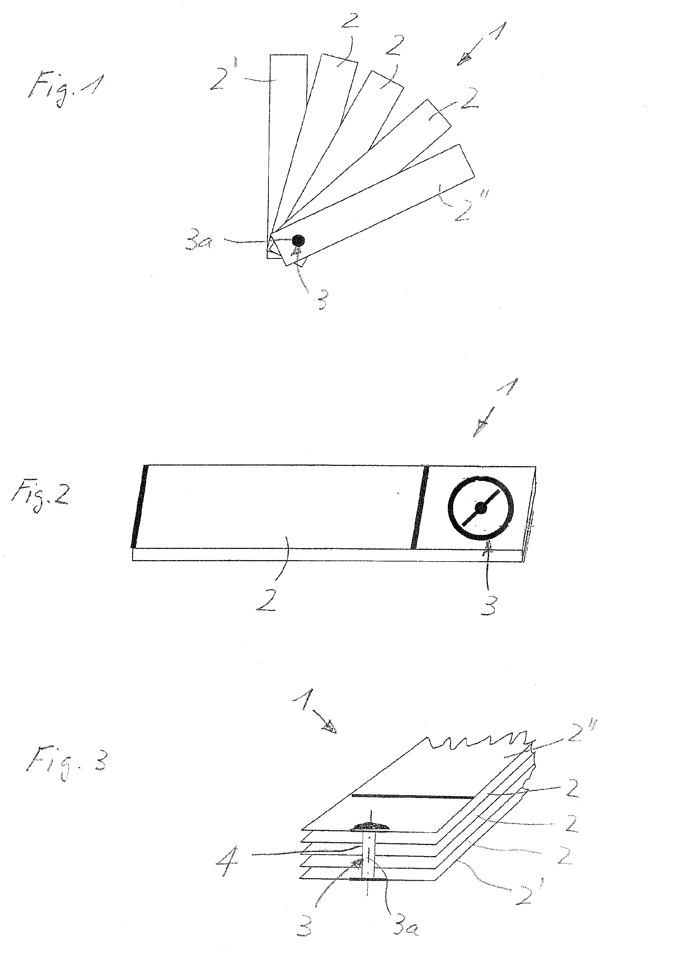

Die in den Fig. 1 - 3 schematisch dargestellte erste Ausführungsform eines erfindungsgemässen tragbaren Speisegerätes 1 besteht aus mehreren flexiblen, gleichartigen Solarmodulen 2, von denen jedes eine Anzahl Solarzellen aufweist. Beim vorliegenden Ausführungsbeispiel werden Dünnschicht - Solarmodule 2 von bekannter Bauart verwendet, vorzugsweise Solarmodule, die von der Firma Iowa Thin Film Technologies Inc. unter der Bezeichnung MP 3-37 auf dem Markt angeboten werden.

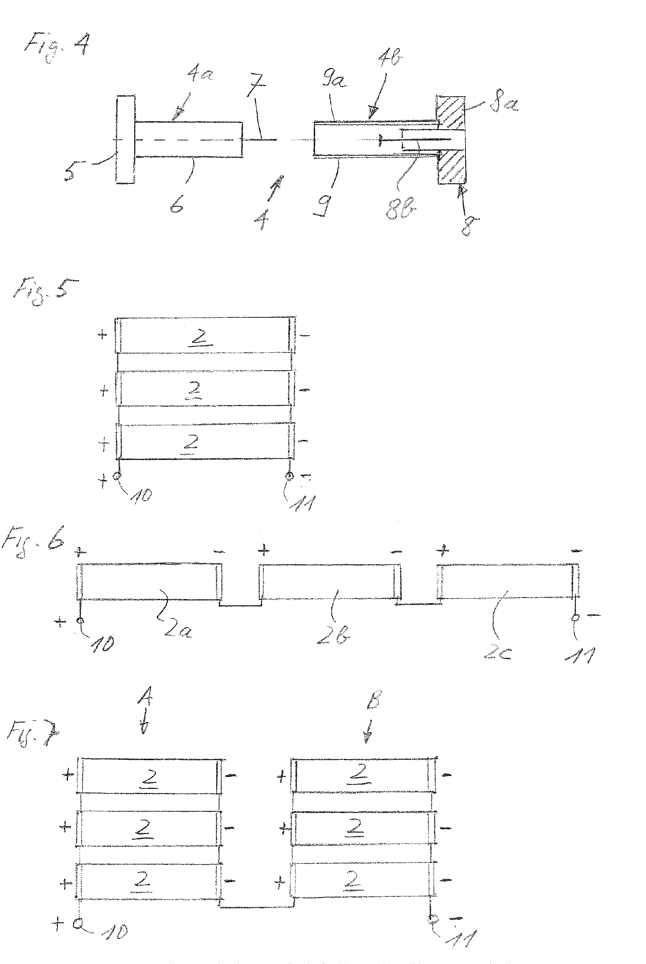

Die rechteckförmigen Solarmodule 2 sind in einem Endbereich mittels einer Gelenkverbindung 3 miteinander verbunden, die eine Schwenkachse 3a festlegt. Diese Gelenkverbindung 3 ermöglicht es, die Solarmodule 2 einzeln aus der in der Fig. 2 gezeigten Ausserbetriebsstellung, in der sie einander überdeckend übereinander liegen, in die in der Fig. 1 gezeigte Betriebsstellung zu verschwenken. In der Fig. 1 sind die Solarmodule 2 vollständig aufgefächert dargestellt, so dass jedes Solarmodul 2 frei liegt und Lichtstrahlung empfangen kann. Es ist selbstverständlich möglich, die Solarmodule 2 nur teilweise aufzufächern, so dass nur ein Teil der Solarmodule 2 für den Empfang von Lichtstrahlung frei liegt. Somit ist es möglich, durch vollständiges oder teilweises Auffächern der Solarmodule 2 die elektrischen Ausgangsgrössen (Strom/Spannung) des Gerätes 1 zu verändern.

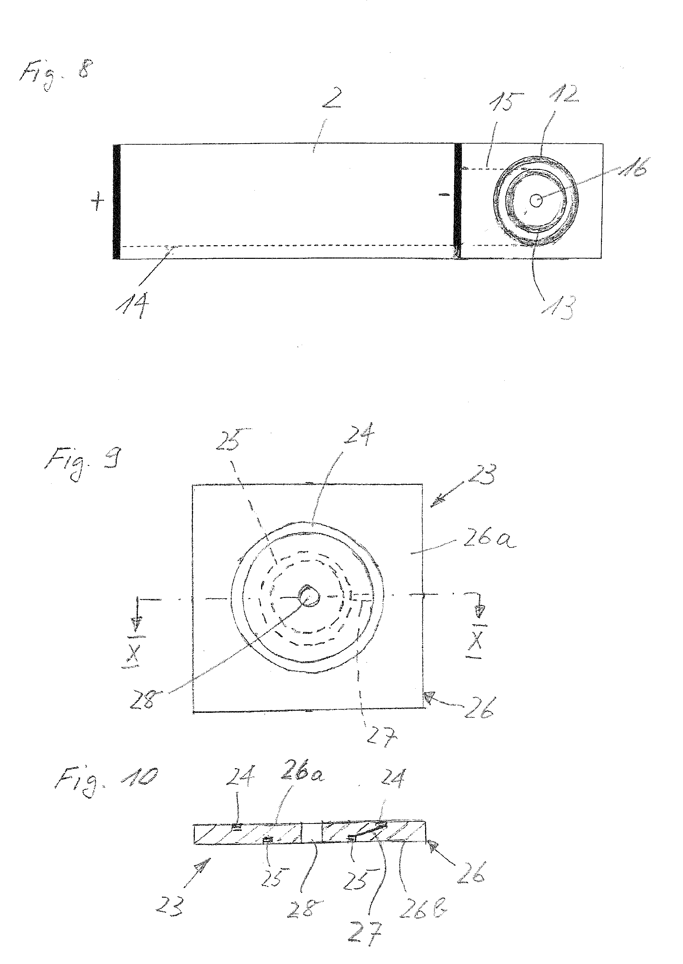

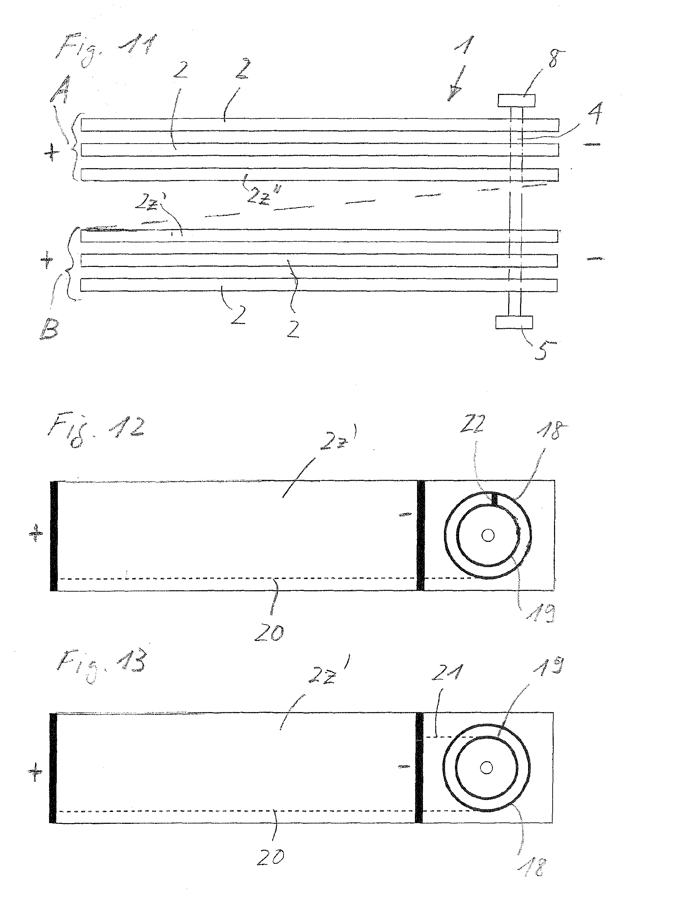

Die Gelenkverbindung 3 wird durch ein zweiteiliges Verbindungselement 4 gebildet, das die Solarmodule 2 durchsetzt, wie das die Fig. 3 zeigt. Dieses in der Fig.4 dargestellte Verbindungselement 4 besteht aus einem ersten Verbindungsstück 4a und einem zweiten Verbindungsstück 4b. Das erste Verbindungsstück 4a weist einen Kopfteil 5 aus einem elektrisch leitenden Material und einen hohlzylindrischen Schaftteil 6 auf, der aus einem elektrisch nicht leitenden Material besteht und mit einem nicht näher dargestellten Innengewinde versehen ist. Im Inneren des Schaftteils 6 verläuft ein elektrischer Leiter 7, der mit dem Kopfteil 5 elektrisch verbunden ist. Der Kopfteil 5 und somit auch der Leiter 7 stehen mit dem +-Pol des untersten Solarmoduls 2' (siehe Fig. 1 und 3) in elektrisch leitender Verbindung.

Das zweite Verbindungsstück 4b weist eine Anschlussbuchse 8 aus einem elektrisch leitenden Material und einen hohlzylindrischen Schaftteil 9 auf. Die Anschlussbuchse 8 besteht aus einem ersten Buchsenteil 8a, der mit dem-Pol des obersten Solarmoduls 2'' (Fig. 1 und 3) in elektrisch leitender Verbindung steht, und einem zweiten Buchsenteil 8b, der mit dem Leiter 7 des ersten Verbindungsstückes 4a in Berührung ist und somit den +-Pol der Anschlussbuchse 8 bildet. Der Schaftteil 9 weist ein Aussengewinde 9a auf, dass in das Innengewinde des Schaftteils 6 des ersten Verbindungsstückes 4a eingreift.

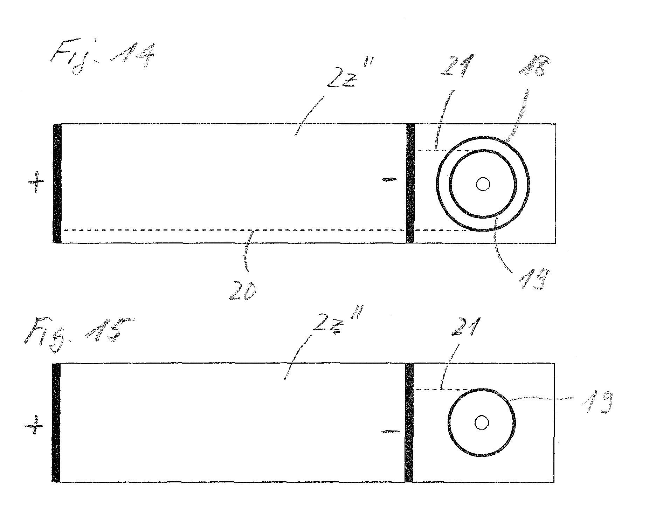

Anhand der Fig. 5 - 7 werden nachfolgend die verschiedenen Möglichkeiten zur elektrischen Schaltung der Solarmodule 2 innerhalb des Gerätes 1 erläutert.

Bei der in der Fig. 5 gezeigten Parallelschaltung sind einerseits die +-Pole und andererseits die --Pole der Solarmodule 2 miteinander verbunden und an den +-Pol 10 bzw. den --Pol 11 des Gerätes 1 angeschlossen.

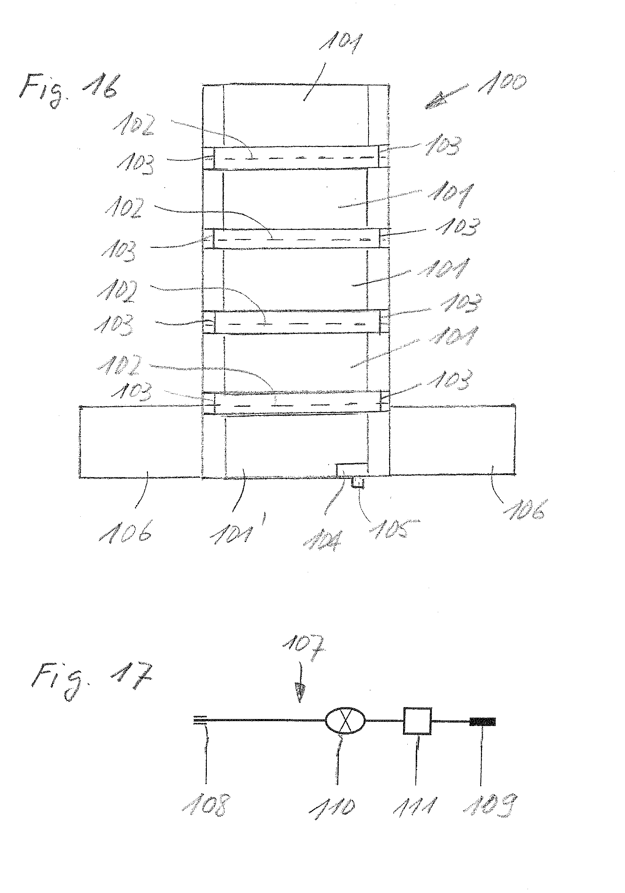

Bei der Serieschaltung gemäss Fig. 6 ist der +-Pol des ersten Solarmoduls 2a mit dem +-Pol 10 des Gerätes 1 verbunden, während der --Pol dieses ersten Solarmoduls 2a am +-Pol des nächsten Solarmoduls 2b angeschlossen ist. Auf dieselbe Weise ist das Solarmodul 2b mit dem nächsten Solarmodul 2c verbunden. Der --Pol des letzten Solarmoduls 2c ist an den --Pol 11 des Gerätes 1 angeschlossen.

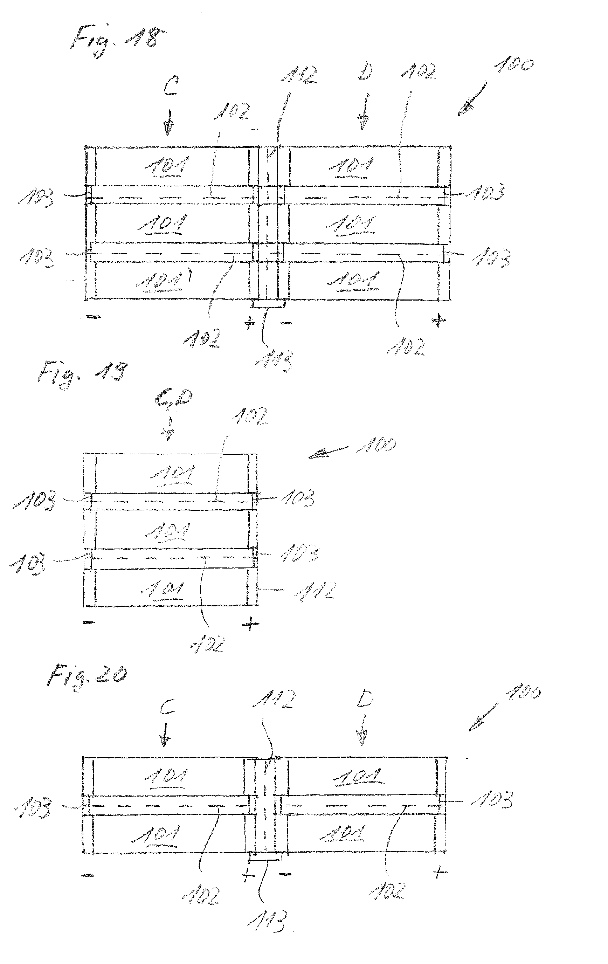

In der Fig. 7 ist die Parallel-/Serieschaltung der Solarmodule 2 dargestellt. Die Solarmodule 2 einer ersten Gruppe A und die Solarmodule 2 einer zweiten Gruppe B sind, wie in Fig. 5 gezeigt, elektrisch parallel geschaltet. Die Serieschaltung der Solarmodule 2 der beiden Gruppen A, B erfolgt dadurch, dass der --Pol der Solarmodule 2 der ersten Gruppe A mit dem +-Pol der zweiten Gruppe B verbunden ist.

In der Fig. 8 ist in Draufsicht ein Solarmodul 2 gezeigt, das für eine Parallelschaltung gemäss Fig. 5 ausgebildet ist. Bei einem solchen Solarmodul 2 sind zwei konzentrische, voneinander isolierte Kontaktringe 12 und 13 vorhanden, die das Solarmodul 2 durchsetzen und von der Ober- und Unterseite des Solarmoduls 2 her zugänglich sind. Der aussen liegende Kontaktring 12 ist dabei über einen gestrichelt angedeuteten Leiter 14 mit dem +-Pol des Solarmoduls 2 verbunden. Der --Pol des Solarmoduls 2 ist über einen ebenfalls gestrichelt dargestellten Leiter 15 mit dem innen liegenden Kontaktring 13 verbunden. Mit 16 ist ein Durchgangsloch im Solarmodul 2 bezeichnet, durch das sich das Verbindungselement 4 hindurch erstreckt (siehe Fig. 3). Die Kontaktringe 12, 13 stellen somit im in den Fig. 1 - 3 gezeigten Gerät 1 die elektrische Verbindung zwischen den übereinander liegenden Solarmodulen 2 her.

Ein zur Bildung einer Reihenschaltung gemäss Fig. 6 geeignetes Zwischenelement 23 ist in der Fig. 9 in Draufsicht und in der Fig. 10 in einem Querschnitt dargestellt.

Das in den Fig. 9 und 10 gezeigte Zwischenelement 23 weist gleich wie das vorstehend beschriebene Solarmodul 2 gemäss Fig.8 zwei konzentrisch angeordnete, voneinander isolierte Kontaktringe 24, 25 auf. Der erste Kontaktring 24 ist auf der Oberseite 26a eines nicht leitenden Trägerelementes 26 angeordnet und weist einen Durchmesser auf, der dem Durchmesser des ersten Kontaktringes 12 des Solarmoduls 2 gemäss Fig. 8 entspricht. Demgegenüber ist der zweite Kontaktring 25 auf der Unterseite 26b des Trägerelementes 26 angeordnet und weist einen Durchmesser auf, der dem Durchmesser des zweiten Kontaktringes 13 des Solarmoduls 2 gemäss Fig. 8 entspricht. Die beiden Kontaktringe 24, 25 sind über einen Verbindungssteg 27 elektrisch miteinander verbunden. Im Trägerelement 26 ist ein Durchgangsloch 28 vorhanden, das dem Durchgangsloch 16 im Solarmodul 2 gemäss Fig. 8 entspricht und im zusammengebauten Zustand zum Durchstecken des Verbindungselementes 4 dient.

Zur Bildung einer Serieschaltung gemäss Fig. 6 werden mehrere Solarmodule 2 gemäss Fig. 8 übereinander gelegt und zwischen jeweils zwei benachbarten Solarmodulen 2 ein Zwischenelement 23 gemäss den Fig. 9 und 10 angeordnet. Dabei steht der Kontaktring 25 auf der Unterseite 26b des Trägerelementes 26 mit dem inneren Kontaktring 13 (--Pol) des darunter liegenden Solarelementes 2 in Berührung, während der Kontaktring 24 auf der Oberseite 26a des Trägerelementes 26 mit dem äusseren Kontaktring 12 (+-Pol) des darüber liegenden Solarelementes 2 in Berührung steht. Die Zwischenelemente 23 verbinden somit den --Pol der Solarmodule 2 mit dem +-Pol des jeweils darüber liegenden Solarmoduls 8.

In der Fig. 11 ist in einer auseinander gezogenen Darstellung und in Seitenansicht ein Speisegerät 1 mit Solarmodulen 2 in Parallel-/Serieschaltung gemäss Fig. 7 gezeigt.

Bei dieser Ausführungsform ist der +-Pol der ersten, unten liegenden Gruppe B von parallel geschalteten Solarmodulen 2 über zwei Sonder-Solarmodule 2z' und 2z'' mit dem --Pol der zweiten, oben liegenden Gruppe A von parallel geschalteten Solarmodulen 2 verbunden. Dabei gehört das erste Sonder-Solarmodul 2z' zur Gruppe B und das zweite Sonder-Solarmodul 2z" zur Gruppe A. Diese beiden Sonder-Solarmodule 2z' und 2z" sind in der Fig. 12 bzw. der Fig. 14 in Draufsicht und in der Fig. 13 bzw. der Fig. 15 in Unteransicht gezeigt.

Das erste Sonder-Solarmodul 2z' gemäss den Fig. 12 und 13 weist zwei konzentrisch angeordnete, voneinander isolierte Kontaktringe 18 und 19 mit unterschiedlichem Durchmesser auf. Sowohl der erste Kontaktring 18 auf der Oberseite des Sonder-Solarmoduls 2z' wie auch der erste Kontaktring 18 auf der Unterseite ist über einen Leiter 20 mit dem +-Pol des Sonder-Solarmoduls 2z' verbunden. Der auf der Unterseite des Sonder-Solarmoduls 2z' liegende zweite Kontaktring 19 ist über einen Leiter 21 mit dem --Pol des Sonder-Solarmoduls 2z' verbunden. Auf der Oberseite des Sonder-Solarmoduls 2z' sind die beiden Kontaktringe 18, 19 mittels eines Kontaktsteges 22 miteinander elektrisch verbunden.

Das zweite Sonder-Solarmodul 2z" gemäss den Fig. 14 und 15 weist auf seiner Oberseite ebenfalls zwei konzentrisch angeordnete, voneinander isolierte Kontaktringe 18 und 19 mit unterschiedlichem Durchmesser auf. Dabei ist der erste Kontaktring 18 über einen Leiter 20 mit dem +-Pol, der zweite Kontaktring 19 über einen Leiter 21 mit dem --Pol verbunden. Auf seiner Unterseite weist das zweite Sonder-Solarmodul 2z'' nur einen Kontaktring 19 auf, der über einen Leiter 21 mit dem --Pol verbunden ist (Fig. 15).

Der Durchmesser der ersten Kontaktringe 18 der Sonder-Solarmodule 2z' und 2z" entspricht dem Durchmesser des äusseren Kontaktringes 12 eines Solarmoduls 2 gemäss Fig. 8, während der Durchmesser der zweiten Kontaktringe 19 der Sonder-Solarmodule 2z' und 2z'' dem Durchmesser des inneren Kontaktringes 13 eines Solarmoduls 2 gemäss Fig. 8 entspricht. Wie aus der Fig. 11 im Zusammenhang mit den Fig. 12 bis 15 ersichtlich ist, wird der +-Pol des ersten Sonder-Solarmoduls 2z' mit dem --Pol des zweiten Sonder-Solarmoduls 2z" verbunden.

Jede Gruppe A, B von Solarmodulen besteht somit aus drei parallel geschalteten Solarmodulen 2, 2z' bzw. 2, 2z'', wobei die beiden Sonder-Solarmodule 2z' und 2z'' die Serienschaltung der beiden Gruppen A und B übernehmen. In der Annahme, jedes Solarmodul sei für eine Nennspannung von 3 V und einen Nennstrom von 50 mA ausgelegt, so kann das Speisegerät gemäss Fig. 11 eine Nennspannung von 6 V und einen Nennstrom von 150 mA liefern.

Es versteht sich, dass die Verbindung zwischen dem +-Pol der unten liegenden Gruppe B von parallel geschalteten Solarmodulen 2 mit dem --Pol der oben liegenden Gruppe A von parallel geschalteten Solarmodulen 2 auch auf andere Weise hergestellt werden kann als mittels der beschriebenen Sonder-Solarmodule 2z' und 2z'', z.B. mittels eines Zwischenelementes 23 gemäss den Fig. 9 und 10.

Bei der Ausführungsform gemäss Fig. 11 ist es von Bedeutung, dass die Anzahl von parallel geschalteten Solarmodulen 2 in beiden Gruppen A und B gleich ist.

Das vorstehend anhand der Fig. 1 - 15 beschriebene Speisegerät 1 mit um die Gelenkverbindung 3 verdrehbaren Solarmodulen 2 ist im zusammengeklappten Zustand der Solarmodule 2, d.h. in der Ausserbetriebsstellung, klein und handlich.

Durch die Möglichkeit, alle oder nur ein Teil der Solarmodule 2 in die Betriebsstellung zu drehen bzw. aufzufächern, kann auf einfache Weise die Ausgangsleistung (Strom/Spannung) des Speisegerätes 1 verändert werden.

Die lösbare Gelenkverbindung 3, d.h. das zweiteilige Verbindungselement 4, erlaubt es, das Speisegerät 1 problemlos umzubauen und z.B. die Anzahl der Solarmodule 2 zu ändern, Solarmodule 2 auszutauschen sowie die Schaltungsart (Parallel-, Serie- oder Parallel-/Serieschaltung) zu ändern.

Anhand der Fig. 16 - 20 wird nun eine zweite Ausführungsform eines erfindungsgemässen Speisegerätes 100 beschrieben, das aus umklappbaren, flexiblen Solarmodulen 101, besteht. Die gleichartigen Solarmodule 101 sind ebenfalls Dünnschicht - Solarmodule von bekannter Bauart, vorzugsweise Solarmodule, die von der Firma Iowa Thin Film Technologies Inc. unter der Bezeichnung MP 3-37 auf dem Markt angeboten werden.

In der Fig. 16 ist in Draufsicht ein solches Speisegerät 100 im Betriebszustand gezeigt, in dem die rechteckigen Solarmodule 101 aufgeklappt sind. Die Solarmodule 101 sind elektrisch parallel geschaltet und entlang von zueinander parallelen Verbindungslinien 102 mechanisch miteinander verbunden und entlang dieser Verbindungslinien 102 umklappbar. Die elektrische Verbindung zwischen den Solarmodulen 101 erfolgt über flexible Verbindungsleitungen 103. Das eine, unterste Solarmodul 101' ist mit einem Festspannungsregler 104 und einer Anschlussbuchse 105 versehen.

Im Ausserbetriebszustand sind alle Solarmodule 101 übereinander gefaltet und liegen auf dem untersten Solarmodul 101' auf, so dass sich ein kleines Paket ergibt. Seitlich des untersten Solarmoduls 101' sind zwei Abdeckungselemente 106 angeordnet, die im ausgeklappten Zustand gezeigt sind und im Ausserbetriebszustand, d.h. bei zusammengefalteten Solarmodulen 101, als Schutz oder Abdeckung über das Paket von übereinander liegenden Solarelementen 101 gelegt werden können. Sind die Abdeckelemente 106 durchsichtig, so ist das oberste Solarelement 101 im Paket auch im Ausserbetriebszustand der Lichtstrahlung ausgesetzt.

In der Fig. 17 ist ein Adapterkabel 107 gezeigt, das sich für den Anschluss an das Speisegerät 100 eignet. Dieses Adapterkabel 107 weist am einen Ende einen Stecker 108 auf, der in die Anschlussbuchse 105 des Gerätes 100 eingesteckt werden kann. Am andern Ende ist das Adapterkabel 107 mit einem Anschlussstecker 109 für den Anschluss eines Verbrauchers versehen. Zum Adapterkabel 107 gehört noch ein optisches Anzeigeelement 110, vorzugsweise eine Leuchtdiode, und ein Schalter 111. Bei Betätigung des Schalters 111 zeigt das Anzeigeelement 110 an, ob am Anschlussstecker 109 die maximale Ausgangsspannung zur Verfügung steht.

Das Adapterkabel 107 kann auch für das Speisegerät 1 gemäss den Fig. 1 - 3 verwendet werden.

In den Fig. 18 - 20 ist in einer der Fig. 16 entsprechenden Darstellung schematisch eine Variante der zweiten Ausführungsform eines erfindungsgemässen Speisegerätes 100 im Betriebszustand dargestellt, wobei die Abdeckungselemente 106, der Festspannungsregler 107 und die Anschlussbuchse 105 nicht gezeigt sind. Bei dieser Variante sind zwei Gruppen C und D von unter sich elektrisch parallel geschalteten Solarmodulen 101 vorhanden. Die Solarmodule 101 jeder Gruppe C, D sind, gleich wie bei der in der Fig. 16 gezeigten Variante, über Verbindungsleitungen 103 elektrisch und über Verbindungslinien 102 mechanisch miteinander verbunden und um diese Verbindungslinien 102 umklappbar. Die beiden nebeneinander liegenden Solarmodulgruppen C, D sind entlang einer zweiten Verbindungslinie 112, die rechtwinklig zu den ersten Verbindungslinien 102 verläuft, miteinander verbunden. Die Solarmodulgruppe C bzw. D ist um diese zweite Verbindungslinie 112 auf die andere Solarmodulgruppe D bzw. C umklappbar. Die untereinander parallel geschalteten Solarmodule 101 jeder Gruppe C, D sind über eine Leitungsverbindung 113 elektrisch in Serie geschaltet. Diese Leitungsverbindung 113 verbindet den +-Pol der Solarmodule 101 der Gruppe C mit dem --Pol der Solarmodule 101 der Gruppe D.

Werden, wie in Fig. 19 dargestellt, die Solarmodule 101 der Gruppe D um die zweite Verbindungslinie 112 hinter die Solarmodule 101 der Gruppe C geklappt, so dass die Solarmodule 101 der Gruppe D abgedeckt sind, so verkleinert sich die Ausgangsspannung des Gerätes 100 bei gleich bleibendem Ausgangsstrom.

Durch Umklappen von nebeneinander liegenden Solarmodulen 101 der Gruppe C und der Gruppe D um eine Verbindungslinie 102 kann bei gleich bleibender Ausgangsspannung die Grösse des Ausgangsstromes des Gerätes 100 verkleinert werden, wie das die Fig. 20 zeigt.

Dieses Verändern der Ausgangsspannung bzw. des Ausgangsstromes soll anhand eines Zahlenbeispiels erläutert werden.

Angenommen, jedes Solarmodul 101 liefere eine Nennspannung von 3 V und einen Nennstrom von 50 mA. Dann beträgt beim Gerät 100, bei dem alle 6 Solarmodule 101 der Lichtstrahlung ausgesetzt sind, die Nennspannung 6 V und der Nennstrom 150 mA. Im in der Fig. 19 dargestellten Zustand, in dem die Solarmodule 101 der Gruppe D durch die Solarmodule 101 der Gruppe C abgedeckt sind, liefert das Gerät 100 eine Nennspannung von nur 3 V bei gleichem Ausgangsstrom von 150 mA. Bei der in der Fig. 20 gezeigten Konfiguration, bei der die beiden obersten (oder die beiden untersten) Solarmodule 101 der Gruppen C, D um die Verbindungslinie 102 nach hinten umgeklappt sind, ist der Nennstrom 100 mA bei einer Nennspannung von 6V.

Es versteht sich, dass bei der Variante gemäss den Fig. 18 - 20 pro Gruppe C, D auch mehr als drei parallel geschaltete Solarmodule 100 und/oder auch mehr als zwei in Serie geschaltete Gruppen C, D vorgesehen werden können.

Es ist selbstverständlich auch beim Gerät 100 gemäss Fig. 16 möglich, durch Umklappen von einem oder mehreren Solarmodulen 101 um die Verbindungslinien 102 die Nennstromstärke bei gleich bleibender Nennspannung zu reduzieren.

Auch bei der Variante gemäss Fig. 18 können die Solarmodule 101, gleich wie bei der Variante des Gerätes 100 gemäss Fig. 16, entlang der Verbindungslinien 102 und 112 so übereinander gefaltet werden, dass alle Solarmodule 101 über dem untersten Solarmodul 101' der Gruppe C (siehe Fig. 18) liegen. So ergibt sich im Ausserbetriebszustand ein kleines Paket, dessen Grundfläche etwa den Abmessungen eines Solarmoduls 101 entspricht.

Bei den in den Fig. 16 und 18 gezeigten Speisegeräten 100 ist es auf einfache Weise möglich, nämlich durch Umklappen von Solarmodulen in eine inaktive Stellung, in der sie vor Lichteinstrahlung geschützt sind, die Ausgangsspannung und/oder den Ausgangsstrom zu verändern.

### Bezugszeichenliste

- 1: Speisegerät (1. Ausführungsform)
- 2: Solarmodul 2z Sonder-Solarmodul
- 3: Gelenkverbindung 3a Schwenkachse
- 4: Verbindungselement
- 4a, 4b: erstes und zweites Verbindungsstück
- 5: Kopfteil von 4a
- 6: Schaftteil von 4a
- 7: elektrischer Leiter
- 8: Anschlussbuchse
- 8a, 8b: erster und zweiter Buchsenteil
- 9: Schaftteil von 4b
- 9a: Aussengewinde
- 10: +-Pol
- 11: --Pol
- 12: erster Kontaktring
- 13: zweiter Kontaktring
- 14: Leiter
- 15: Leiter
- 16: Durchgangsloch
- 17:
- 18: erster Kontaktring
- 19: zweiter Kontaktring
- 20: Leiter
- 21: Leiter
- 22: Kontaktsteg
- 23: Zwischenelement
- 24: erster Kontaktring
- 25: zweiter Kontaktring
- 26: Trägerelement 26a Oberseite 26b Unterseite
- 27: Verbindungssteg
- 28: Durchgangsloch

- 100: Speisegerät (2. Ausführungsform)
- 101: Solarmodul
- 102: Verbindungslinie
- 103: Verbindungsleitung
- 104: Festspannungsregler
- 105: Anschlussbuchse
- 106: Abdeckungselemente
- 107: Adapterkabel
- 108: Stecker
- 109: Anschlussstecker
- 110: optisches Anzeigeelement
- 111: Schalter
- 112: Verbindungslinie
- 113: Leitungsverbindung

## Patentansprüche

1. Tragbares Speisegerät (1; 100) zur Stromversorgung von elektrischen Kleingeräten, mit mehreren, Solarzellen enthaltenden, flexiblen Solarmodulen (2; 101), die untereinander elektrisch in Serie und/oder parallel geschaltet sind und miteinander derart elektrisch leitend sowie gelenkig oder scharnierartig verbunden sind, dass die Solarmodule (2; 101) aus einer Ausserbetriebsstellung, in der sie übereinander liegend angeordnet sind, in eine Betriebsstellung bringbar sind, in der mindestens ein Solarmodul (2; 101) zum Empfang von Lichtstrahlung frei liegt.

2. Speisegerät nach Anspruch 1, **dadurch gekennzeichnet, dass** die Solarmodule (2; 101) Dünnschicht-Solarmodule sind.

3. Speisegerät nach Anspruch 1 oder 2, **dadurch gekennzeichnet, dass** die Solarmodule (2) um eine gemeinsame Schwenkachse (3a) schwenkbar sind und einzeln aus der Ausserbetriebsstellung in die Betriebsstellung ausschwenkbar sind.

4. Speisegerät nach Anspruch 3, **dadurch gekennzeichnet, dass** alle Solarmodule (2) elektrisch parallel geschaltet sind.

5. Speisegerät nach Anspruch 3, **dadurch gekennzeichnet, dass** alle Solarmodule (2) elektrisch in Serie geschaltet sind.

6. Speisegerät nach Anspruch 3, **dadurch gekennzeichnet, dass** die Solarmodule (2) in mindestens zwei Gruppen (A, B) von untereinander elektrisch parallel geschalteten Solarmodulen (2) unterteilt sind und die Solarelementgruppen (A, B) elektrisch in Serie geschaltet sind.

7. Speisegerät nach einem der Ansprüche 3 - 6, **dadurch gekennzeichnet, dass** jedes Solarmodul (2) zwei voneinander elektrisch isolierte Kontaktelemente (12, 13) aufweist, von denen das eine Kontaktelement (12) mit dem +-Pol des Solarelementes (2) und das andere Kontaktelement (13) mit dessen --Pol verbunden ist und die jeweils die elektrische Verbindung zu einem Kontaktelement (12, 13) des benachbarten Solarmoduls (2) herstellen.

8. Speisegerät nach Anspruch 7, **dadurch gekennzeichnet, dass** die Kontaktelemente (12, 13) zur Schwenkachse (3a) konzentrisch angeordnet sind.

9. Speisegerät nach Anspruch 7, **gekennzeichnet durch** ein Zwischenelement (23) zur elektrischen Verbindung von übereinander liegenden Solarelementen (2), das zwei voneinander elektrisch isolierte Kontaktringe (25, 26) aufweist, von denen der eine, erste Kontaktring (24) auf der Oberseite (26a) und der andere, zweite Kontaktring (25) auf der Unterseite (26b) eines Trägerelementes (26) angeordnet ist und die beiden Kontaktringe (24, 25) elektrisch miteinander verbunden sind, vorzugsweise mittels eines Verbindungssteges (27).

10. Speisegerät nach einem der Ansprüche 3 - 9, **dadurch gekennzeichnet, dass** die Schwenkachse (3a) durch ein Verbindungselement (4) festgelegt ist, die die übereinander angeordneten Solarelemente (2) durchsetzt, aus zwei lösbar miteinander verbundenen Teilen (4a, 4b) besteht und eine Anschlussbuchse (8) aufweist.

11. Speisegerät nach Anspruch 10, **dadurch gekennzeichnet, dass** durch Lösen der der beiden Teile (4a, 4b) des Verbindungselementes (4) Solarmodule (2) entfernt oder hinzugefügt werden können.

12. Speisegerät nach Anspruch 1 oder 2, **dadurch gekennzeichnet, dass** die Solarmodule (101) mechanisch miteinander verbunden sind und entlang von Verbindungslinien (102) aus der Ausserbetriebsstellung, in der sie zusammengefaltet sind, in die Betriebsstellung umklappbar sind.

13. Speisegerät nach Anspruch 12, **dadurch gekennzeichnet, dass** die Verbindungslinien (102) parallel zueinander verlaufen und die Solarmodule (101) elektrisch parallel geschaltet sind.

14. Speisegerät nach Anspruch 12, **dadurch gekennzeichnet, dass** die Verbindungslinien (102) parallel zueinander verlaufen und die Solarmodule (101) elektrisch in Serie geschaltet sind.

15. Speisegerät nach Anspruch 13 oder 14, **dadurch gekennzeichnet, dass** die Solarmodule (101) in mindestens zwei miteinander mechanisch verbundenen Gruppen (C, D) von untereinander elektrisch parallel geschalteten Solarmodulen (101) unterteilt sind und dass die Solarelementgruppen (C, D) entlang einer zweiten Verbindungslinie (112), die rechtwinklig zu den zueinander parallelen, ersten Verbindungslinien (102) verläuft, umklappbar sind und elektrisch in Serie geschaltet sind.

16. Speisegerät nach Anspruch 13 oder 14, **dadurch gekennzeichnet, dass** die Solarmodule (101) rechteckförmig sind und entlang von sich parallel zu ihren Längs- und Querseiten verlaufenden Verbindungslinien (102, 112) umklappbar sind.

17. Speisegerät nach einem der Ansprüche 1 - 16, **gekennzeichnet durch** ein Adapterkabel (107) mit einer Anzeigeanordnung zum Anzeigen des Betriebszustandes, die zwischen einem Stecker (108) für den Anschluss an eine Anschlussbuchse (8, 105) des Speisegerätes (1; 100) und einem Anschlussstecker (109) zum Anschliessen an einen Verbraucher angeordnet ist und vorzugsweise **durch** einen Schalter (111) und ein optisches Anzeigeelement (110) gebildet ist.

18. Verfahren zum Betrieb eines Speisegerätes nach einem der Ansprüche 12 - 17, **dadurch gekennzeichnet, dass** zur Veränderung der Ausgangsstromstärke und/oder der Ausgangsspannung des Gerätes ein Teil der Solarmodule (101) auf die Unterseite der übrigen Solarmodule (101) umgeklappt wird.
